# EUROPÄISCHE PATENTSCHRIFT

(11) **EP 3 077 954 B1**
(45) Veröffentlichungstag und Bekanntmachung des Hinweises auf die Patenterteilung: **15.08.2018**
(21) Anmeldenummer: 14799980.9
(22) Anmeldetag: 10.11.2014
(51) Int. Cl.: G06K 7/10

(54) **KOMMUNIKATIONSVORRICHTUNG ZUM IDENTIFIZIEREN UND/ODER LOKALISIEREN EINES RFID-TRANSPONDERS**
COMMUNICATION DEVICE FOR IDENTIFYING AND/OR LOCATING AN RFID TRANSPONDER
DISPOSITIF DE COMMUNICATION SERVANT À IDENTIFIER ET/OU LOCALISER UN TRANSPONDEUR RFID

(30) Priorität: 07.01.2014 DE 102014200037
(43) Veröffentlichungstag der Anmeldung: 12.10.2016
(73) Patentinhaber: Siemens Aktiengesellschaft, 80333 München (DE)
(72) Erfinder: MÜLLER, Dominikus Joachim, 82223 Eichenau (DE); ZIROFF, Andreas, 81671 München (DE)
(86) Internationale Anmeldenummer: PCT/EP2014/074131
(87) Internationale Veröffentlichungsnummer: WO 2015/104078

(56) Entgegenhaltungen:
- US-A1- 2006 261 161
- US-A1- 2010 052 856

## Beschreibung

Die vorliegende Erfindung betrifft eine Kommunikationsvorrichtung zum Identifizieren und/oder Lokalisieren eines RFID-Transponders mit einem ersten RFID-Lesegerät und zumindest einem zweiten RFID-Lesegerät, wobei das erste und/oder das zumindest eine zweite RFID-Lesegerät zum Identifizieren und/oder Lokalisieren des RFID-Transponders ein Anfragesignal an den RFID-Transponder aussenden und ein Antwortsignal von dem RFID-Transponder empfangen. Darüber hinaus betrifft die vorliegende Erfindung ein Kommunikationsnetz mit einer solchen Kommunikationsvorrichtung. Schließlich betrifft die vorliegende Erfindung ein Verfahren zum Identifizieren und/oder Lokalisieren eines RFID-Transponders.

Mit der RFID-Technik (RFID: Radio-Frequency Identification) können beispielsweise Gegenstände identifiziert und lokalisiert werden. Ein RFID-System umfasst einen RFID-Transponder, der beispielsweise an einem Gegenstand angebracht werden kann. Darüber hinaus umfasst das RFID-System eines oder mehrere RFID-Lesegeräte, die ein entsprechendes Anfragesignal aussenden können. Das Anfragesignal wird in Form eines magnetischen Wechselfelds ausgesendet. Dieses Wechselfeld kann auch dazu dienen, den RFID-Transponder mit Energie zu versorgen. Auf das Anfragesignal hin sendet der RFID-Transponder ein Antwortsignal an die RFID-Lesegeräte zurück. Anhand von diesem Signal kann der RFID-Transponder eindeutig identifiziert werden.

Wenn beispielsweise in einem Raum mehrere RFID-Lesegeräte vorhanden sind, die Anfragesignale aussenden, kann es zu einer Kollision der Signale von den RFID-Lesegeräten und dem RFID-Transponder kommen. Falls die von mehreren RFID-Lesegeräten gesendeten Anfragesignale zu verschiedenen Zeitpunkten am RFID-Transponder ankommen und sich mehrere Befehlsabfolgen zum Auslesen einer Identifikation destruktiv überlagern, wird die nötige Modulationstiefe nicht erreicht und die Identifikation kann nicht ausgelesen werden.

Hierzu beschreibt die US 2006/0261161 A1 eine Wareninformationsregistrierungsvorrichtung, welche zwei RFID-Lesegeräte umfassen kann. Die Wareninformationsregistrierungsvorrichtung umfasst ferner ein POS-Terminal mit einem Prozessor, mit dem die RFID-Lesegeräte zum Aussenden eines Anfragesignals angesteuert werden können.

Zudem ist aus der US 2010/052856 A1 ein RFID-System bekannt, welches zur Triangulation dient. Das System kann drei RFID-Lesegeräte und eine Steuereinrichtung, welche mit den RFID-Lesegeräten verbunden ist, aufweisen. Mit den RFID-Lesegeräten können RFID-Transponder identifiziert und lokalisiert werden. Mittels der Steuereinrichtung können die RFID-Lesegeräte beispielsweise sequentiell aktiviert werden, um ein Anfragesignal auszusenden.

Es ist Aufgabe der vorliegenden Erfindung, das Identifizieren und/oder Lokalisieren eines RFID-Transponders zuverlässiger zu ermöglichen.

Diese Aufgabe wird durch eine Kommunikationsvorrichtung mit den Merkmalen des Patentanspruchs 1 und durch ein Verfahren mit den Merkmalen des Patentanspruchs 9 gelöst. Vorteilhafte Weiterbildungen der vorliegenden Erfindung sind Gegenstand der abhängigen Ansprüche.

Die erfindungsgemäße Kommunikationsvorrichtung zum Identifizieren und/oder Lokalisieren eines RFID-Transponders umfasst ein erstes RFID-Lesegerät und zumindest ein zweites RFID-Lesegerät, wobei das erste und/oder das zumindest eine zweite RFID-Lesegerät zum Identifizieren und/oder Lokalisieren des RFID-Transponders ein Anfragesignal an den RFID-Transponder aussenden und ein Antwortsignal von dem RFID-Transponder empfangen und wobei die Kommunikationsvorrichtung eine Auslöseeinrichtung aufweist, die dazu ausgebildet ist, an das erste und/oder das zumindest eine zweite RFID-Lesegerät ein Auslösesignal zu senden, infolge dessen das erste und/oder das zumindest eine zweite RFID-Lesegerät das Anfragesignal aussendet. Zudem ist Auslöseeinrichtung dazu ausgebildet zu überprüfen, ob das erste RFID-Lesegerät und/oder das zumindest eine zweite RFID-Lesegerät zum Senden des Anfragesignals bereit sind.

Die Auslöseeinrichtung kann somit koordinieren, wann die RFID-Lesegeräte das Anfragesignal an den RFID-Transponder aussenden. Insbesondere kann die Auslöseeinrichtung die RFID-Lesegeräte so ansteuern, dass diese das Anfragesignal gleichzeitig aussenden. Somit kann ein synchroner Betrieb von mehreren RFID-Lesegeräten ermöglicht werden. Dieser Betriebsmodus der Kommunikationsvorrichtung ermöglicht durch die konstruktive Überlagerung der Signale, die von den im Raum verteilten RFID-Lesegeräten ausgesendet werden, eine Feldstärkenerhöhung an einer bestimmten Position im Raum. Durch diese Methode kann die Lesereichweite von herkömmlichen passiven RFID-Transpondern, die auch als RFID-Tags bezeichnet werden, deutlich erhöht werden.

Darüber hinaus kann sichergestellt werden, dass die Signale zum Auslesen von Informationen des RFID-Transponders zum gleichen Zeitpunkt gesendet werden und es so zu keiner Kollision von Signalen - gesendet von verschiedenen im Raum verteilten RFID-Lesegeräten - kommt. Auf diese Weise kann sichergestellt werden, dass die von den kohärenten RFID-Lesegeräten gesendeten Anfragesignale sich an einem RFID-Transponder zu einem Signal konstruktiv überlagern und zudem die geforderte Modulationstiefe erreicht wird.

Die Auslöseeinrichtung ist dazu ausgebildet zu überprüfen, ob das erste RFID-Lesegerät und/oder das zumindest eine zweite RFID-Lesegerät zum Senden des Anfragesignals bereit sind. Somit kann mit der Auslöseeinrichtung zuverlässig der Betriebszustand der RFID-Lesegeräte überprüft werden. Erst wenn die RFID-Lesegeräte sendebereit sind, kann mit der Auslöseeinrichtung das Auslösesignal an die jeweiligen RFID-Lesegeräte übertragen werden. Somit kann ein zuverlässiger Betrieb der Kommunikationsvorrichtung ermöglicht werden.

Bevorzugt ist die Auslöseeinrichtung dazu ausgebildet, das Auslösesignal an das erste und/oder das zumindest eine zweite RFID-Lesegerät zu einem vorbestimmten Zeitpunkt zu senden. Somit kann erreicht werden, dass mehrere RFID-Lesegeräte das Anfragesignal gleichzeitig aussenden und das Anfragesignal gleichzeitig am RFID-Transponder eintrifft. Somit können zuverlässig Kollisionen zwischen den Anfragesignalen der einzelnen RFID-Lesegeräte verhindert werden.

In einer Ausführungsform ist die Auslöseeinrichtung dazu ausgebildet, das Auslösesignal periodisch an das erste und/oder das zumindest eine zweite RFID-Lesegerät zu senden. Das erste und/oder das zumindest eine zweite RFID-Lesegerät kann auch mehrere Anfragesignale beziehungsweise eine Folge von Anfragesignalen an den RFID-Transponder senden. Beispielsweise können die mehreren Anfragesignale in zeitlich gleichen Abständen zu dem RFID-Transponder gesendet werden. Somit kann ein zuverlässiger Betrieb der Kommunikationsvorrichtung ermöglicht werden.

In einer weiteren Ausgestaltung weisen das erste RFID-Lesegerät und/oder das zumindest eine zweite RFID-Lesegerät ein erstes Anschlusselement zum Empfangen des Auslösesignals auf. Die RFID-Lesegeräte weisen üblicherweise eine Steuereinheit auf. An dieser Steuereinheit kann ein erstes Anschlusselement beziehungsweise ein erster Pin vorgesehen sein, über welchen das jeweilige RFID-Lesegerät mit der Auslöseeinrichtung verbunden ist. Somit kann das Auslösesignal zuverlässig von der Auslöseeinrichtung an das jeweilige RFID-Lesegerät übertragen werden.

In einer weiteren Ausführungsform weisen das erste RFID-Lesegerät und/oder das zumindest eine zweite RFID-Lesegerät ein zweites Anschlusselement auf, an dem ein Signal ausgebbar ist, das beschreibt, ob das erste RFID-Lesegerät und/oder das zumindest eine zweite RFID-Lesegerät zum Aussenden des Anfragesignals bereit sind. Die RFID-Lesegeräte beziehungsweise deren Steuereinheiten können eine zweiten Anschluss beziehungsweise einen zweiten Pin aufweisen, an dem jeweils ein Signal ausgegeben wird, das charakterisiert, ob die jeweiligen RFID-Lesegeräte sendebereit sind. Somit kann zuverlässig der jeweilige Betriebszustand der RFID-Lesegeräte abgefragt werden.

In einer weiteren Ausgestaltung ist die Auslöseeinrichtung dazu ausgebildet, das Vorhandensein einer Datenverbindung zwischen der Auslöseeinrichtung und dem ersten RFID-Lesegerät sowie einer Datenverbindung zwischen der Auslöseeinrichtung und dem zumindest einen zweiten RFID-Lesegerät zu überprüfen. Mit anderen Worten kann die Auslöseeinrichtung überprüfen, ob und wie viele RFID-Lesegeräte mit der Auslöseeinrichtung verbunden sind. Damit können die RFID-Lesegeräte mittels der Auslöseeinrichtung zuverlässig angesteuert werden.

In einer weiteren Ausführungsform umfasst das erste RFID-Lesegerät die Auslöseeinrichtung. In dieser Ausführungsform der Erfindung kann die Funktionalität der Auslöseeinrichtung durch eines der RFID-Lesegeräte bereitgestellt werden. Dieses kann als Master-RFID-Lesegerät dienen und das zumindest eine zweite RFID-Lesegerät kann als Slave-RFID-Lesegerät dienen. Somit bedarf es keiner zusätzlichen Hardware, um die Kommunikationsvorrichtung bereitzustellen.

Das erfindungsgemäße Kommunikationsnetz umfasst die erfindungsgemäße Kommunikationsvorrichtung und zumindest einen RFID-Transponder. In dem Kommunikationsnetz kann der RFID-Transponder zuverlässig identifiziert und/oder lokalisiert werden.

Das erfindungsgemäße Verfahren zum Identifizieren und/oder Lokalisieren eines RFID-Transponders beinhaltet das Bereitstellen eines ersten RFID-Lesegeräts, das Bereitstellen zumindest eines zweiten RFID-Lesegeräts, das Aussenden eines Anfragesignals an den RFID-Transponder und Empfangen eines Antwortsignals von dem RFID-Transponder mit dem ersten und/oder dem zumindest zweiten RFID-Lesegerät zum Identifizieren und/oder Lokalisieren des RFID-Transponders, das Senden eines Auslösesignals mit einer Auslöseeinrichtung an das erste und/oder das zumindest eine zweite RFID-Lesegerät, infolge dessen von dem ersten und/oder dem zumindest einen zweiten RFID-Lesegerät das Anfragesignal ausgesendet wird und das Überprüfen mit der Auslöseeinrichtung, ob das erste RFID-Lesegerät und/oder das zumindest eine zweite RFID-Lesegerät zum Senden des Anfragesignals bereit sind.

Die zuvor im Zusammenhang mit der erfindungsgemäßen Kommunikationsvorrichtung beschriebenen Vorteile und Weiterbildungen gelten sinngemäß für das erfindungsgemäße Kommunikationsnetz und das erfindungsgemäße Verfahren.

Die vorliegende Erfindung wird nun anhand der beigefügten Zeichnungen näher erläutert. Dabei zeigen:
- FIG 1: eine schematische Darstellung einer Kommunikationsvorrichtung zum Identifizieren und/oder Lokalisieren eines RFID-Transponders;
- FIG 2: eine schematische Darstellung, anhand derer die Übertragung der Anfragesignale und Antwortsignale zwischen RFID-Lesegeräten und dem RFID-Transponder verdeutlich ist;
- FIG 3: eine Schaltung einer Auslöseeinrichtung der Kommunikationsvorrichtung; und
- FIG 4: eine Tabelle, in der die einzelnen Zustände der Schaltung gemäß FIG 3 verdeutlicht sind.

Die nachfolgend näher geschilderten Ausführungsbeispiele stellen bevorzugte Ausführungsformen der vorliegenden Erfindung dar.

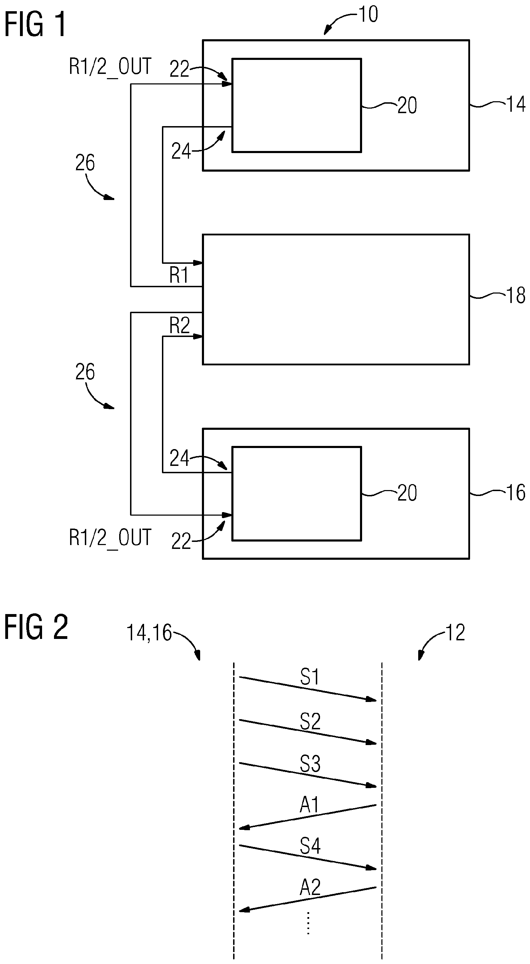

FIG 1 zeigt eine schematische Darstellung einer Kommunikationsvorrichtung 10 zum Identifizieren und/oder Lokalisieren eines RFID-Transponders 12. Die Kommunikationsvorrichtung 10 umfasst ein erstes RFID-Lesegerät 14 und ein zweites RFID-Lesegerät 16, die vorliegend baugleich ausgebildet sind. Die RFID-Lesegeräte 14, 16 sind dazu ausgebildet, eines oder mehrere Anfragesignale an einen RFID-Transponder 12 zu senden. Darüber hinaus sind die RFID-Lesegeräte 14, 16 dazu ausgebildet, von dem RFID-Transponder 12 ein Antwortsignal zu empfangen. Anhand des Antwortsignals kann der RFID-Transponder 12 identifiziert und/oder lokalisiert werden.

FIG 2 verdeutlicht die Befehlsabfolge zwischen den RFID-Lesegeräten 14, 16 und dem RFID-Transponder 12 zum Identifizieren des RFID-Transponders 12. Das Identifizieren erfolgt durch das Auslesen einer Kennzeichnung, die auch als EPC (Electronic Product Code) bezeichnet wird. Die vorliegende Befehlsabfolge erfolgt nach dem sogenannten EPC-Class-1-Gen2-Standard. Bevor eine EPC von dem RFID-Transponder 12 an die im Raum verteilten RFID-Lesegeräte 14, 16 gesendet wird, werden zunächst von den RFID-Lesegeräten 14, 16 drei Anfragesignale S1, S2 und S3 an den RFID-Transponder 12 gesendet. Das erste Anfragesignal S1 entspricht dem Befehl "Select", das zweite Anfragesignal S2 entspricht dem Befehl "Query" und das dritte Anfragesignal S3 entspricht dem Befehl "Query-Rep". Der RFID-Transponder 12 quittiert diese drei Befehle beziehungsweise Anfragesignale S1, S2, S3 mit einem ersten Antwortsignal A1, das auch als RN16 bezeichnet wird. Anschließend erfolgt ein weiteres, von den RFID-Lesegeräten 14, 16 gesendetes Anfragesignal, das auch als ACK RN16 bezeichnet wird. Daraufhin erst wird von dem RFID-Transponder 12 an die RFID-Lesegeräte 14, 16 in dem Antwortsignal A2 die EPC übermittelt.

Wenn die RFID-Lesegeräte 14, 16 die Fragesignale S1 bis S4 zu unterschiedlichen Zeitpunkten an den RFID-Transponder 12 senden, kann es zu Kollisionen zwischen den Signalen kommen. Darüber hinaus kann die nötige Modulationstiefe nicht erreicht werden, wenn beispielsweise die von den RFID-Lesegeräten 14, 16 gesendeten Anfragesignale S1 bis S4 zu verschiedenen Zeitpunkten an dem RFID-Transponder 12 ankommen. Um einen synchronen Betrieb der RFID-Lesegeräte 14, 16 zu ermöglichen, müssen die Anfragesignale S1 bis S4 von den RFID-Lesegeräten 14, 16 zum selben Zeitpunkt ausgesendet werden.

Zu diesem Zweck weist die in FIG 1 dargestellte Kommunikationsvorrichtung 10 zusätzlich eine Auslöseeinrichtung 18 auf, die dazu ausgebildet ist, ein Auslösesignal R1/2_OUT an jeweilige Steuereinheiten 20 der RFID-Lesegeräte 14, 16 zu senden, infolgedessen die RFID-Lesegeräte 14, 16 das Anfragesignal beziehungsweise die Anfragesignale S1 bis S4 aussenden. Hierfür weisen die RFID-Lesegeräte 14, 16 beziehungsweise deren Steuereinheiten 20 ein erstes Anschlusselement 22 beziehungsweise einen Pin auf, der einen Signaleingang für das Auslösesignal R1/2_OUT darstellt. Darüber hinaus weisen die Steuereinheiten 20 ein zweites Anschlusselement 24 auf, an dem jeweils ein Signal R1, R2 ausgegeben werden kann, das beschreibt, ob das jeweilige RFID-Lesegerät 14, 16 zum Aussenden des Anfragesignals S1 bis S4 bereit ist. Die RFID-Lesegeräte 14, 16 können jeweils mit einem Koaxialkabel 26 mit der Auslöseeinrichtung 18 verbunden sein. Die Steuereinheiten 20 der RFID-Lesegeräte können beispielsweise durch einen Mikrocontroller bereitgestellt werden.

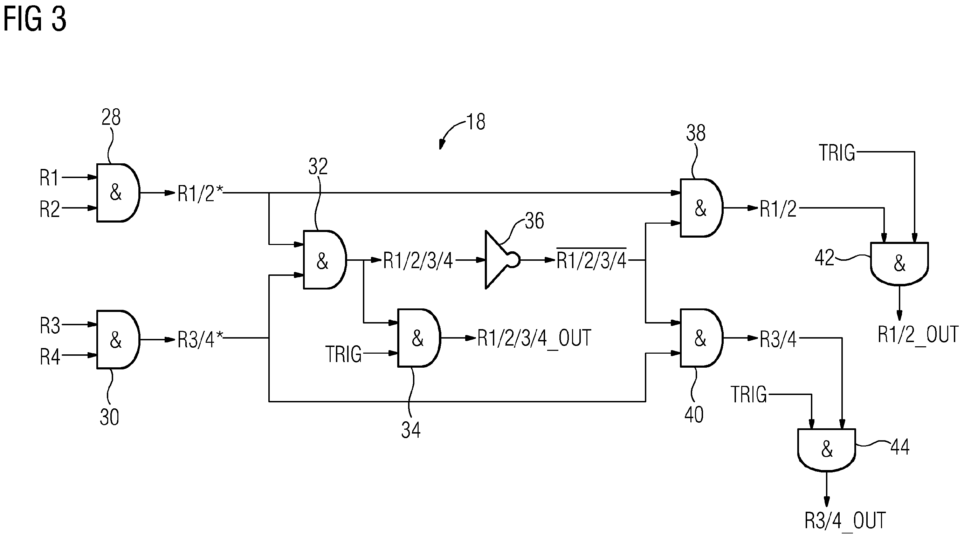

FIG 3 zeigt eine Schaltung der Auslöseeinrichtung 18 für ein Beispiel, bei dem vier RFID-Lesegeräte 14, 16 verwendet werden. Wenn die RFID-Lesegeräte 14, 16 zum Aussenden des Anfragesignals S1 bis S4 bereit sind, wird an deren jeweiligem zweiten Anschlusselement 24 eine logische 1 ausgegeben. Dies ist vorliegend durch die Signale R1, R2, R3 und R4 verdeutlicht. Sobald ein RFID-Lesegerät 14, 16 im Programmlauf vor dem Senden steht, wird das jeweilige Signal R1, R2, R3 oder R4 ausgegeben. Das RFID-Lesegerät 14, 16 verbleibt so lange an dieser Stelle im Programmablauf, bis ebenfalls ein zweites RFID-Lesegerät 14, 16 seinen Status auf logisch 1 setzt. Wenn die ersten beiden RFID-Lesegeräte 14, 16 zum Senden bereit sind, liegt am Ausgang des ersten UND-Gatters 28 das Signal R1/2* an (R1/2* = R1 & R2). Wenn das dritte und das vierte RFID-Lesegerät 14, 16 zum Senden bereit sind, liegt am Ausgang des zweiten UND-Gatters 30 das Signal R3/4* an (R3/4* = R3 & R4).

Die Signale R1/2* und R3/4* werden einem dritten Und-Gatter 32 zugeführt. Falls alle RFID-Lesegeräte 14, 16 sendebereit sind, liegt am Ausgang des dritten UND-Gatters 32 das Signal R1/2/3/4 an (R1/2/3/4 = R1/2* & R3/4*). Dieses Signal wird wiederum dem Eingang eines vierten UND-Gatters 34 zugeführt. Liegt dieses Signal und zugleich ein Triggersignal TRIG an dem vierten UND-Gatter 34 an, wird das Signal R1/2/3/4_OUT ausgegeben, infolge dessen alle RFID-Lesegeräte das Anfragesignal S1 bis S4 aussenden. Das Triggersignal TRIG kann beispielsweise durch einen Schalter bereitgestellt werden, mit dem die Auslöseeinrichtung 18 aktiviert und deaktiviert werden kann.

Darüber hinaus wird das Signal R1/2/3/4 einem NICHT-Gatter 36 zugeführt, dessen Ausgang (NOT R1/2/3/4) wiederum mit einem fünften UND-Gattern 38 und einem sechsten UND-Gatter 40 verbunden ist. Wenn am Eingang des fünften UND-Gatters 38 die Signale R1/2* und NOT R1/2/3/4 anliegen, wird am Ausgang des fünften UND-Gatters 38 das Signal R1/2 ausgegeben (R1/2 = R1/2* & NOT R1/2/3/4). Der Ausgang des UND-Gatters 38 ist mit dem Eingang des siebten UND-Gatters 42 verbunden, das als weiteren Eingang das Triggersignal TRIG empfängt. Liegen diese beiden Signale an dem UND-Gatter 42 an, wird das Auslösesignal R1/2_OUT ausgegeben, in Folge dessen das erste und das zweite RFID-Lesegerät 14, 16 die Anfragesignale S1 bis S4 aussenden. Falls am Eingang des sechsten UND-Gatters 40 die Signale R3/4* und NOT R1/2/3/4 anliegen, wird am Ausgang des sechsten UND-Gatters 40 das Signal R3/4 ausgegeben (R3/4 = R3/4* & NOT R1/2/3/4). Der Ausgang des UND-Gatters 40 ist mit dem Eingang des achten UND-Gatters 44 verbunden, das als weiteren Eingang das Triggersignal TRIG empfängt. Liegen diese beiden Signale an dem UND-Gatter 44 an, wird das Auslösesignal R3/4_OUT ausgegeben, in Folge dessen das dritte und das vierte RFID-Lesegerät die Anfragesignale S1 bis S4 aussenden.

Mit der dargestellten Schaltung wird außerdem geprüft, ob weitere RFID-Lesegeräte 14, 16 angeschlossen sind. Ist dies nicht der Fall, dann wird beispielsweise der Ausgang R1/2_OUT auf logisch 1 gesetzt und somit das jeweilige erste Anschlusselement 22 auf logisch 1 gesetzt, worauf die RFID-Lesegeräte im Programmablauf weiterarbeiten. Daraufhin werden die Werte R1, R2, R3 oder R4 an dem zweiten Anschlusselement 24 auf logisch 0 gesetzt. Mit dieser Schaltung können - ohne Veränderungen an der Hardware vorzunehmen - entweder zwei oder vier RFID-Lesegeräte 14, 16 angeschlossen werden. Sollten in dem vorliegenden Ausführungsbeispiel drei RFID-Lesegeräte 14, 16 verwendet werden, muss der vierte Eingang manuell auf logisch 1 gesetzt werden.

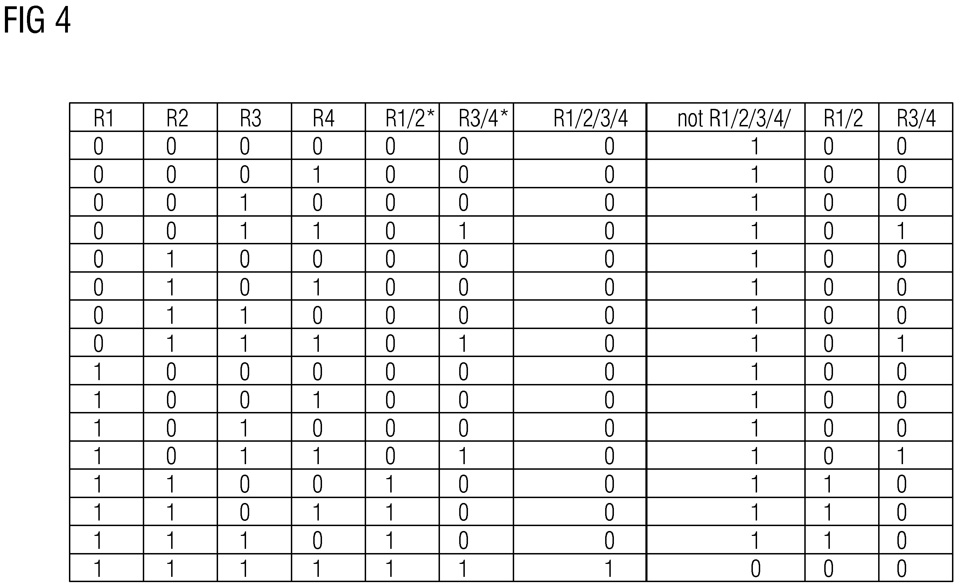

In der Tabelle gemäß FIG 4 sind die Zustände der Auslöseeinrichtung 18, das heißt alle Ausgabemöglichkeiten (R1/2, R3/4, R1/2/3/4) abhängig von der Kombination der Eingangssignale (R1, R2, R3, R4) dargestellt. Durch die Verneinung des Gesamtergebnisses (NOT R1/2/3/4) und den Vergleich mit den Zwischenergebnissen R1/2* und R3/4* wird erkannt, wie viele RFID-Lesegeräte 14, 16 beziehungsweise an welchen Eingängen RFID-Lesegeräte 14, 16 angeschlossen sind. Durch das Triggersignal TRIG, der beispielsweise durch einen einfachen Schalter realisiert werden kann, kann die Auslöseeinrichtung 18 aktiviert oder deaktiviert werden. Die dargestellte Schaltung ist für bis zu vier RFID-Lesegeräte 14, 16 ausgelegt und kann prinzipiell durch Vervielfältigung für einen Betrieb mit mehr als vier RFID-Lesegeräten erweitert werden.

Die hardwaretechnische Ausführung der Auslöseeinrichtung 18 auf Basis von Logik-Komponenten kann durch die Verwendung eines eigenen Mikrocontrollers erfolgen, wodurch dann das Abfragen der Anschlusselemente und die logischen Zustände gemäß der Tabelle in Software implementiert werden können. Ein Vorteil ergibt sich dadurch, dass für alle angeschlossenen RFID-Lesegeräte eine Softwareversion genügt. Standardisierte Softwareversionen können prinzipiell verwendet werden, die an wenigen Stellen im Programmcode modifiziert werden müssen, an denen ein Befehl zum Senden eines modulierten Signals vorgesehen ist. Der Programmcode wird dann so erweitert, dass vor dem Senden von modulierten Signalen eine definierte Pin auf einen logischen Zustand hin überprüft beziehungsweise abgefragt wird und ein logischer Zustand eines definierten Pins geändert wird.

Als weitere Ausführungsform können die beiden RFID-Lesegeräte 14, 16 über entsprechende Leitungen miteinander verbunden sein. Eines der RFID-Lesegeräte 14, 16 agiert bei dieser Ausführungsform als Master-Lesegerät, das andere als Slave-Lesegerät. Die Auswertung der Logikzustände erfolgt durch das Master-Lesegerät. Das Slave-Lesegerät teilt während des Programmlaufs zum Auslesen der EPC über das zweite Anschlusselement 24 dem Master-Lesegerät mit, wann es die entsprechenden Anfragesignale S1 bis S4 senden möchte. Das Master-Lesegerät teilt wiederum über das erste Anschlusselement 22 dem Slave-Lesegerät mit, wann es diese tatsächlich senden darf, nämlich genau dann, wenn auch das Master-Lesegerät diese Befehle senden möchte. Bei dieser Variante bedarf es zwei verschiedener Softwareversionen für die Steuereinheiten 20 der RFID-Lesegeräte. Darüber hinaus müssen an dem Master-Lesegerät entsprechende Anschlusselemente 22, 24 vorgesehen werden.

Bei einer dritten Ausführungsform wird ein Auslösesignal zum Beispiel in Form eines Rechenimpulses, das an einen Pin der jeweiligen Steuereinheiten 20 anliegt, verwendet. Sobald das Auslösesignal von der Steuereinheit 20 erkannt wird, wird zum Beispiel bei Beginn der Befehlsabfolge mit dem Aussenden des Anfragesignals S1 bis S4 begonnen, und nach einer bestimmten einstellbaren Zeit erfolgt ein weiteres Auslösesignal, wodurch das nächste modulierte Sendesignal gemäß der Reihenfolge gesendet wird und so weiter. Für die dritte Ausführungsform wird ebenfalls eine Auslöseeinrichtung 18 benötigt, um ein Auslösesignal mit einer definierten Frequenz und Pulsbreite ausgeben zu können. Darüber hinaus muss das RFID-Lesegerät 14, 16 ein erstes Anschlusselement 22 aufweisen.

## Patentansprüche

1. Kommunikationsvorrichtung (10) zum Identifizieren und/oder Lokalisieren eines RFID-Transponders (12) mit
- einem ersten RFID-Lesegerät (14) und
- zumindest einem zweiten RFID-Lesegerät (16), wobei
- das erste und/oder das zumindest eine zweite RFID-Lesegerät (14, 16)zum Identifizieren und/oder Lokalisieren des RFID-Transponders (12) ein Anfragesignal (S1 bis S4) an den RFID-Transponder (12) aussenden und ein Antwortsignal (A1, A2) von dem RFID-Transponder (12) empfangen, wobei
- die Kommunikationsvorrichtung (10) eine Auslöseeinrichtung (18) aufweist, die dazu ausgebildet ist, an das erste und/oder das zumindest eine zweite RFID-Lesegerät (14, 16) ein Auslösesignal (R1/2_OUT, R3/4_OUT, R1/2/3/4_OUT) zu senden, in Folge dessen das erste und/oder das zumindest eine zweite RFID-Lesegerät (14, 16) das Anfragesignal (S1 bis S4) aussendet,
**dadurch gekennzeichnet, dass**
- die Auslöseeinrichtung (18) dazu ausgebildet ist, zu überprüfen, ob das erste RFID-Lesegerät (14) und/oder das zumindest eine zweite RFID-Lesegerät (16) zum Senden des Anfragesignals (S1 bis S4) bereit sind.

2. Kommunikationsvorrichtung (10) nach Anspruch 1, wobei die Auslöseeinrichtung (18) dazu ausgebildet ist, das Auslösesignal (R1/2_OUT, R3/4_OUT, R1/2/3/4_OUT) an das erste und/oder das zumindest eine zweite RFID-Lesegerät (14, 16) zu einem vorbestimmten Zeitpunkt zu senden.

3. Kommunikationsvorrichtung (10) nach Anspruch 1 oder 2, wobei die Auslöseeinrichtung (18) dazu ausgebildet ist, das Auslösesignal (R1/2_OUT, R3/4_OUT, R1/2/3/4_OUT) periodisch an das erste und/oder das zumindest eine zweite RFID-Lesegerät (14, 16) zu senden.

4. Kommunikationsvorrichtung (10) nach einem der vorhergehenden Ansprüche, wobei das erste RFID-Lesegerät (14) und/oder das zumindest eine zweite RFID-Lesegerät (16) ein erstes Anschlusselement (22) zum Empfangen des Auslösesignals (R1/2_OUT, R3/4_OUT, R1/2/3/4_OUT) aufweisen.

5. Kommunikationsvorrichtung (10) nach einem der vorhergehenden Ansprüche, wobei das erste RFID-Lesegerät (14) und/oder das zumindest eine zweite RFID-Lesegerät (14) ein zweites Anschlusselement (24) aufweisen, an dem ein Signal (R1, R2, R3, R4) ausgebbar ist, das beschreibt, ob das erste RFID-Lesegerät (14) und/oder das zumindest eine zweite RFID-Lesegerät (16) zum Aussenden des Anfragesignals (S1 bis S4) bereit sind.

6. Kommunikationsvorrichtung (10) nach einem der vorhergehenden Ansprüche, wobei die Auslöseeinrichtung (18) dazu ausgebildet ist, das Vorhandensein einer Datenverbindung zwischen der Auslöseeinrichtung (18) und dem ersten RFID-Lesegerät (14) sowie einer Datenverbindung zwischen der Auslöseeinrichtung (18) und dem zumindest einen zweiten RFID-Lesegerät (16) zu überprüfen.

7. Kommunikationsvorrichtung (10) nach einem der vorhergehenden Ansprüche, wobei das erste RFID-Lesegerät (12) die Auslöseeinrichtung umfasst

8. Kommunikationsnetz mit einer Kommunikationsvorrichtung (10) nach einem der vorhergehenden Ansprüche und zumindest einem RFID-Transponder (12).

9. Verfahren zum Identifizieren und/oder Lokalisieren eines RFID-Transponders (12) durch
- Bereitstellen eines ersten RFID-Lesegeräts (14),
- Bereitstellen zumindest eines zweiten RFID-Lesegerät (16),
- Aussenden eines Anfragesignals (S1 bis S4) an den RFID-Transponder (12) und Empfangen eines Antwortsignals (A1, A2) von dem RFID-Transponder (12) mit dem ersten und/oder dem zumindest einen zweiten RFID-Lesegerät (14, 16) zum Identifizieren und/oder Lokalisieren des RFID-Transponders (12) und
- Senden eines Auslösesignals (R1/2_OUT, R3/4_OUT, Rl/2/3/4_OUT) mit einer Auslöseeinrichtung (18) an das erste und/oder das zumindest eine zweite RFID-Lesegerät (14, 16), in Folge dessen von dem ersten und/oder dem zumindest eine zweiten RFID-Lesegerät (14, 16) das Anfragesignal (S1 bis S4) aussendet wird,
**gekennzeichnet durch**
- Überprüfen mit der Auslöseeinrichtung (18), ob das erste RFID-Lesegerät (14) und/oder das zumindest eine zweite RFID-Lesegerät (16) zum Senden des Anfragesignals (S1 bis S4) bereit sind.

## Claims

1. Communication device (10) for identifying and/or locating an RFID transponder (12) with
- a first RFID reader (14) and
- at least a second RFID reader (16), wherein
- the first and/or the at least a second RFID reader (14, 16) for identifying and/or locating the RFID transponder (12) send(s) out a query signal (S1 to S4) to the RFID transponder (12) and receive(s) a response signal (A1, A2) from the RFID transponder (12), wherein
- the communication device (10) has a triggering device (18), which is designed to send a triggering signal (R1/2_OUT, R3/4_OUT, R1/2/3/4_OUT) to the first and/or the at least a second RFID reader (14, 16), as a result of which the first and/or the at least a second RFID reader (14, 16) send(s) out the query signal (S1 to S4),
**characterized in that**
- the triggering device (18) is designed to check whether the first RFID reader (14) and/or the at least a second RFID reader (16) is/are ready to send the query signal (S1 to S4).

2. Communication device (10) according to Claim 1, wherein the triggering device (18) is designed to send the triggering signal (R1/2_OUT, R3/4_OUT, R1/2/3/4_OUT) to the first and/or the at least a second RFID reader (14, 16) at a predetermined point in time.

3. Communication device (10) according to Claim 1 or 2, wherein the triggering device (18) is designed to send the triggering signal (R1/2_OUT, R3/4_OUT, R1/2/3/4_OUT) to the first and/or the at least a second RFID reader (14, 16) periodically.

4. Communication device (10) according to one of the preceding claims, wherein the first RFID reader (14) and/or the at least a second RFID reader (16) has/have a first connection element (22) for receiving the triggering signal (R1/2_OUT, R3/4_OUT, R1/2/3/4_OUT).

5. Communication device (10) according to one of the preceding claims, wherein the first RFID reader (14) and/or the at least a second RFID reader (16) has/have a second connection element (24), at which a signal (R1, R2, R3, R4) that describes whether the first RFID reader (14) and/or the at least a second RFID reader (16) is/are ready for sending out the query signal (S1 to S4) can be output.

6. Communication device (10) according to one of the preceding claims, wherein the triggering device (18) is designed to check the presence of a data connection between the triggering device (18) and the first RFID reader (14) and a data connection between the triggering device (18) and the at least a second RFID reader (16).

7. Communication device (10) according to one of the preceding claims, wherein the first RFID reader (12) comprises the triggering device.

8. Communication network with a communication device (10) according to one of the preceding claims and at least one RFID transponder (12).

9. Method for identifying and/or locating an RFID transponder (12) by
- providing a first RFID reader (14),
- providing at least a second RFID reader (16),
- sending out a query signal (S1 to S4) to the RFID transponder (12) and receiving a response signal (A1, A2) from the RFID transponder (12) with the first and/or the at least a second RFID reader (14, 16) for identifying and/or locating the RFID transponder (12), and
- sending a triggering signal (R1/2_OUT, R3/4_OUT, R1/2/3/4_OUT) by a triggering device (18) to the first and/or the at least a second RFID reader (14, 16), as a result of which the query signal (S1 to S4) is sent out by the first and/or the at least a second RFID reader (14, 16), **characterized by**
- checking with the triggering device (18) whether the first RFID reader (14) and/or the at least a second RFID reader (16) is/are ready to send the query signal (S1 to S4).

## Revendications

1. Dispositif de communication (10) destiné à l'identification et/ou à la localisation d'un transpondeur RFID (12) équipé
- d'un premier appareil de lecture RFID (14) et
- d'au moins un deuxième appareil de lecture RFID (16),
le premier et/ou le au moins un deuxième appareil de lecture RFID (14, 16) destiné à l'identification et/ou à la localisation du transpondeur RFID (12) émettant un signal de demande (S1 à S4) au transpondeur RFID (12) et recevant un signal de réponse (A1, A2) du transpondeur RFID (12),
le dispositif de communication (10) possédant un équipement déclencheur (18) réalisé pour envoyer, au premier et/ou au moins au deuxième appareil de lecture RFID (14, 16), un signal de déclenchement (R1/2_OUT, R3/4_OUT, R1/2/3/4_OUT), à la suite duquel le premier et/ou le au moins un deuxième appareil de lecture RFID (14, 16) émet le signal de demande (S1 à S4), **caractérisé en ce que**
l'équipement déclencheur (18) est réalisé pour vérifier si le premier appareil de lecture RFID (14) et/ou le au moins un deuxième appareil de lecture RFID (16) est prêt à envoyer le signal de demande (S1 à S4).

2. Dispositif de communication (10) selon la revendication 1, l'équipement déclencheur (18) étant réalisé pour envoyer le signal de déclenchement (R1/2_OUT, R3/4_OUT, R1/2/3/4_OUT) au premier et/ou au au moins un deuxième appareil de lecture RFID (14, 16) à un moment prédéterminé.

3. Dispositif de communication (10) selon la revendication 1 ou 2, l'équipement déclencheur (18) étant réalisé pour envoyer le signal de déclenchement (R1/2_OUT, R3/4_OUT, R1/2/3/4_OUT) périodiquement au premier et/ou au au moins un deuxième appareil de lecture RFID (14, 16).

4. Dispositif de communication (10) selon l'une des revendications précédentes, le premier appareil de lecture RFID (14) et/ou le au moins un deuxième appareil de lecture RFID (16) possédant un premier élément de connexion (22) pour la réception du signal de déclenchement (R1/2_OUT, R3/4_OUT, R1/2/3/4_OUT).

5. Dispositif de communication (10) selon l'une des revendications précédentes, le premier appareil de lecture RFID (14) et/ou le au moins un deuxième appareil de lecture RFID (16) possédant un deuxième élément de connexion (24) auquel un signal (R1, R2, R3, R4) peut être visualisé, lequel décrit si le premier appareil de lecture RFID (14) et/ou le au moins un deuxième appareil de lecture RFID (16) sont prêts à l'émission du signal de demande (S1 à S4).

6. Dispositif de communication (10) selon l'une des revendications précédentes, l'équipement déclencheur (18) étant réalisé pour vérifier la présence d'une liaison de données entre l'équipement déclencheur (18) et le premier appareil de lecture RFID (14) ainsi que celle d'une liaison de données entre l'équipement déclencheur (18) et le au moins un deuxième appareil de lecture RFID (16).

7. Dispositif de communication (10) selon l'une des revendications précédentes, le premier appareil de lecture RFID (14) comprenant l'équipement déclencheur.

8. Réseau de communication avec un dispositif de communication (10) selon l'une des revendications précédentes et au moins un transpondeur RFID (12).

9. Procédé d'identification et/ou de localisation d'un transpondeur RFID (12) par
- fourniture d'un premier appareil de lecture RFID (14),
- fourniture d'au moins un deuxième appareil de lecture RFID (16),
émission d'un signal de demande (S1 à S4) au transpondeur RFID (12) et réception d'un signal de réponse (A1, A2) du transpondeur RFID (12) avec le premier et/ou le au moins un deuxième appareil de lecture RFID (14, 16) destiné à l'identification et/ou à la localisation du transpondeur RFID (12) et
- envoi d'un signal de déclenchement (R1/2_OUT, R3/4_OUT, R1/2/3/4_OUT) avec un équipement déclencheur (18) au premier et/ou au au moins un deuxième appareil de lecture RFID (14, 16), à la suite duquel le signal de demande (S1 à S4) est émis du premier et/ou du au moins un deuxième appareil de lecture RFID (14, 16),
**caractérisé par**:
- une vérification, à l'aide de l'équipement déclencheur (18), pour savoir si le premier appareil de lecture RFID (14) et/ou le au moins un deuxième appareil de lecture RFID (16) est prêt à l'envoi du signal de demande (S1 à S4).
